# FASCICULE DE BREVET EUROPEEN

(11) **EP 2 126 927 B1**
(45) Date de publication et mention de la délivrance du brevet: **16.08.2017**
(21) Numéro de dépôt: 07872385.5
(22) Date de dépôt: 18.12.2007
(51) Int. Cl.: G21C 3/356

(54) **GRILLE-ENTRETOISE A ELEMENTS D'APPUI EN FORME DE SELLE DE CHEVAL ET ASSEMBLAGE DE COMBUSTIBLE NUCLEAIRE MUNI D'UNE TELLE GRILLE**
ABSTANDHALTERGITTER MIT SATTELFÖRMIGEN STÜTZELEMENTEN UND HIERMIT VERSEHENES KERBRENNSTABBÜNDEL
SPACER GRILLE WITH SADDLE-SHAPED SUPPORT ELEMENTS AND CORRESPONDING NUCLEAR FUEL ASSEMBLY

(30) Priorité: 26.12.2006 FR 0611381
(43) Date de publication de la demande: 02.12.2009
(73) Titulaire: AREVA NP, 92400 Courbevoie (FR)
(72) Inventeur: D'USTON DE VILLEREGLAN, Bérenger, Lynchburg, VA 24502 (US); BOIS, Claude, 69100 Villeurbanne (FR); BONNAMOUR, Bruno, 69100 Villeurbanne (FR); BONNAMOUR, Michel, 69008 Lyon (FR)
(74) Mandataire: Lavoix
(86) Numéro de dépôt international: PCT/FR2007/002098
(87) Numéro de publication internationale: WO 2008/090289

(56) Documents cités:
- EP-A- 1 416 500
- EP-A1- 0 196 598
- DE-A1- 2 364 349
- FR-A- 2 028 039
- FR-A- 2 065 721
- FR-A1- 2 531 258
- FR-A1- 2 837 975
- US-A- 4 923 669
- US-A- 4 957 697
- US-A- 5 243 635
- US-B1- 6 606 369
- DATABASE WPI Week 198714 Thomson Scientific, London, GB; AN 1987-096709 XP002454255 & JP 62 043592 A (HITACHI LTD) 25 février 1987 (1987-02-25)

## Description

L'invention concerne une grille-entretoise pour assemblage de combustible nucléaire pour réacteur à eau légère, l'assemblage de combustible nucléaire comprenant des crayons de combustible nucléaire s'étendant le long d'une direction longitudinale, la grille-entretoise étant du type délimitant un réseau sensiblement régulier de cellules de réception des crayons de combustible nucléaire, chaque cellule étant entourée par une ceinture périphérique de parois et ayant un axe longitudinal central destiné à être sensiblement confondu avec l'axe d'un crayon de combustible nucléaire destiné à être reçu dans la cellule, la grille-entretoise comprenant en outre des éléments d'appui qui font saillie depuis la ceinture périphérique de parois à l'intérieur des cellules, les éléments d'appui comprenant des parties de contact dont des surfaces orientées vers l'intérieur des cellules sont destinées à venir au contact des crayons de combustible nucléaire, la surface intérieure d'au moins un élément d'appui ayant avant irradiation une forme concave dans un plan transversal à la direction longitudinale.

Les réacteurs nucléaires refroidis par de l'eau légère, et en particulier les réacteurs nucléaires refroidis par de l'eau sous pression, utilisent des assemblages de combustible nucléaire comportant des crayons de combustible qui s'étendent le long d'une direction longitudinale et qui sont maintenus en un faisceau par un squelette. Chaque crayon comporte une gaine dans laquelle sont empilées des pastilles de combustible nucléaire.

Le squelette d'un assemblage de combustible nucléaire comporte en particulier une pluralité de grilles-entretoises réparties suivant la longueur du faisceau de crayons.

Les grilles-entretoises assurent le maintien transversal des crayons et comportent chacune un ensemble de cellules juxtaposées et disposées suivant un réseau sensiblement régulier, généralement à maille carrée. Les cellules ont elles-mêmes une section de forme carrée dans un plan transversal de la grille-entretoise.

Chacune des cellules est délimitée et séparée des cellules voisines par une ceinture périphérique de parois ayant la forme de la surface latérale d'un parallélépipède à base carrée.

Les cellules de la grille-entretoise sont ouvertes à leurs deux extrémités longitudinales pour pouvoir recevoir un crayon dans une disposition généralement centrale, disposition dans laquelle l'axe du crayon est placé suivant l'axe de la cellule.

En outre, les crayons de combustible nucléaire présentent un diamètre sensiblement inférieur au côté des cellules, de sorte qu'il subsiste un espace libre autour de chaque crayon, entre la surface externe du crayon et la paroi périphérique de la cellule dans laquelle le crayon est engagé longitudinalement.

La grille-entretoise comporte, dans chacune des cellules destinées à recevoir un crayon de combustible, des éléments d'appui destinés à venir en contact avec la surface externe du crayon de combustible correspondant. Les éléments d'appui assurent le maintien du crayon dans des directions transversales perpendiculaires à l'axe du crayon et de la cellule et dans la direction longitudinale, tout en autorisant des déplacements limités du crayon longitudinalement, par exemple sous l'effet de la dilatation à l'intérieur du coeur du réacteur nucléaire.

Les éléments d'appui comprennent des bossettes rigides et/ou des bossettes élastiques et/ou des ressorts.

Ces éléments font saillie à l'intérieur des cellules auxquelles ils sont associés et sont soit réalisés par découpage et repoussage des ceintures périphériques de parois, soit rapportés et fixés sur ces dernières.

On connaît des éléments d'appui qui sont orientés longitudinalement, comme décrit par exemple dans le document US-5 793 832, transversalement, comme décrit dans le document US-5 183 629, ou encore de manière oblique, comme décrit par exemple dans les documents US-4 803 043, US 4 923 669 et FR 2 837 975.

Chaque élément d'appui vient au contact de la surface externe du crayon de combustible correspondant au moyen d'une surface d'une partie de contact, cette surface étant orientée vers l'intérieur de la cellule considérée.

Cette surface intérieure est généralement plane de sorte que le contact avec le crayon de combustible nucléaire est théoriquement un contact cylindre/plan.

Lors du fonctionnement du réacteur nucléaire, l'eau de refroidissement, qui circule avec une vitesse ascendante importante dans le coeur, provoque des mouvements oscillatoires de faible amplitude des crayons de combustible nucléaire à l'intérieur des grilles-entretoises. Ce phénomène appelé « fretting » va conduire à des frottements entre les crayons de combustible nucléaire et les parties de contact qui peuvent conduire à une usure des gaines des crayons de combustible nucléaire. Cette usure pourrait entraîner un perçage des gaines des crayons de combustible et donc un relâchement de gaz et de matières radioactifs dans l'eau du circuit primaire pouvant conduire à l'arrêt du réacteur pour déchargement prématuré des assemblages de combustible comportant des crayons défectueux.

Afin de réduire ces risques, le document US-5 243 635 a décrit une grille du type précité. Les surfaces intérieures des parties de contact des éléments d'appui présentent une concavité transversale de même rayon de courbure que les surfaces externes des crayons. Cette concavité transversale permet d'envelopper la surface externe des gaines des crayons de combustible nucléaire, et ainsi d'accroître l'aire des zones de contact effectif avec les crayons et donc de réduire les risques d'endommagement des gaines par fretting.

Toutefois, les écarts par rapport aux dimensions et aux positions nominales qui apparaissent nécessairement dans les grilles-entretoises fabriquées, du fait des tolérances de fabrication, conduisent à des modifications des positions relatives des parties de contact par rapport aux surfaces externes des crayons de combustible nucléaire. Le contact peut ainsi s'établir de manière incontrôlée, par exemple via les bords inférieur, supérieur ou latéraux de la zone de contact, en particulier lorsque la surface de la partie de contact n'est pas tangente à la surface du crayon de combustible ce qui peut conduire à un endommagement rapide des gaines des crayons par fretting.

Un but de l'invention est de résoudre ce problème en fournissant une grille-entretoise du type précité qui permette de limiter les risques d'endommagement des crayons de combustible nucléaire par fretting et dont l'efficacité soit moins sensible aux tolérances de fabrication de la grille-entretoise et du crayon de combustible.

A cet effet, l'invention a pour objet une grille-entretoise selon la revendication 1.

Selon des modes particuliers de réalisation, la grille-entretoise peut comprendre une ou plusieurs des caractéristiques des revendications 2 à 6.

L'invention a également pour objet un assemblage de combustible nucléaire pour réacteur à eau légère selon la revendication 7.

Selon des modes particuliers de réalisation, l'assemblage peut comprendre une ou plusieurs des caractéristiques des revendications 8 à 11.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en élévation d'un assemblage de combustible nucléaire d'un réacteur nucléaire refroidi par de l'eau sous pression,
- la figure 2 est une vue schématique, partielle et en plan d'une grille-entretoise de l'assemblage de combustible nucléaire de la figure 1 réalisée suivant l'art antérieur,
- la figure 3 est une vue schématique en perspective d'une cellule d'une grille-entretoise suivant l'invention avant irradiation,
- la figure 4 est une vue schématique, partielle et de dessus, illustrant le contact entre un élément d'appui de la cellule de la grille-entretoise de la figure 3 avec un crayon de combustible nucléaire, et
- la figure 5 est une vue schématique, partielle et en coupe longitudinale et radiale prise suivant la ligne V-V de la figure 4.

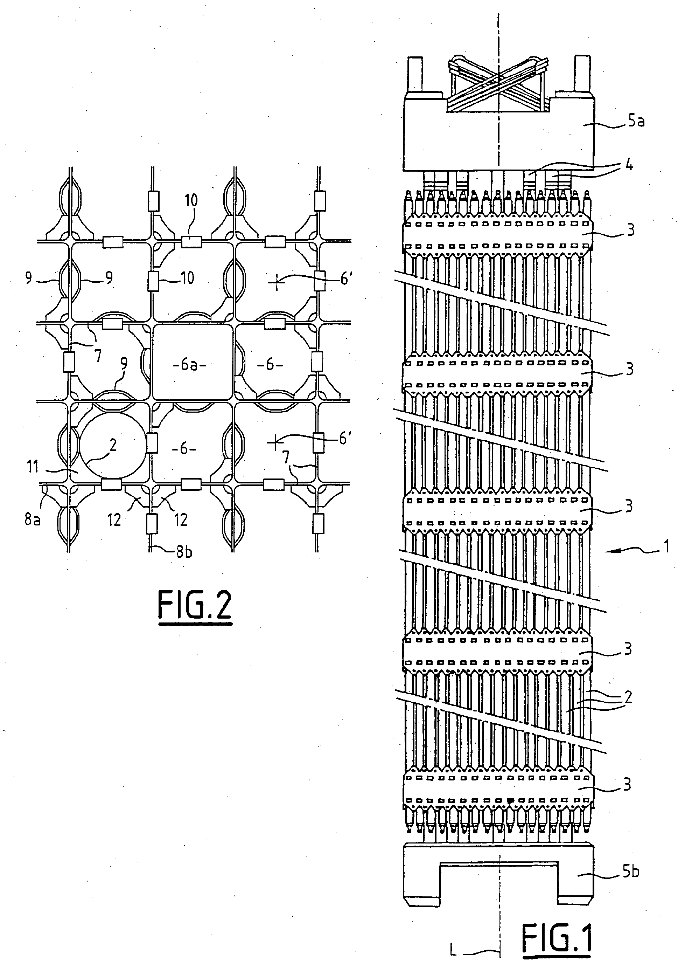

Sur la figure 1, on a représenté un assemblage de combustible nucléaire 1 pour un réacteur nucléaire refroidi par de l'eau sous pression.

L'assemblage de combustible nucléaire 1 comprend un faisceau de crayons de combustible nucléaire 2 s'étendant le long d'une direction longitudinale L. Chaque crayon 2 comprend classiquement une gaine métallique dans laquelle sont empilées des pastilles de combustible nucléaire. La gaine est fermée à ses extrémités longitudinales par des bouchons.

Les crayons de combustible nucléaire 2 sont maintenus en faisceau par un squelette qui comporte :
- une pluralité de grilles-entretoises 3 réparties suivant la direction longitudinale L,
- des tubes-guides 4 qui sont placés à l'intérieur du faisceau de crayons de combustible nucléaire 2 et assemblés avec les grilles-entretoises 3,
- un embout supérieur 5a, et
- un embout inférieur 5b.

Les embouts 5a et 5b sont fixés rigidement aux extrémités des tubes-guides 4 dont la longueur est supérieure à celle des crayons de combustible nucléaire 2.

Les grilles-entretoises 3 assurent le maintien transversal et longitudinal des crayons de combustible nucléaire 2 et comportent, comme on le voit sur la figure 2, des cellules 6 à section carrée disposées suivant un réseau régulier à maille carrée. Chaque cellule 6 comporte une ceinture périphérique de parois 7. La ceinture 7 a une forme parallélépipédique à base carrée ouverte à ses deux extrémités dans la direction de l'axe 6' de la cellule 6. Cet axe 6' est perpendiculaire au plan de la figure 2, orienté longitudinalement et passe par le centre de la section carrée de la cellule 6.

Les ceintures périphériques 7 des cellules 6 de la grille-entretoise 3 sont constituées par des plaquettes entrecroisées à angle droit constituant deux familles de plaquettes 8a et 8b parallèles entre elles.

Les plaquettes 8a et 8b des deux familles de plaquettes sont découpées dans des feuillards métalliques, par exemple en alliage de zirconium, et comportent, à des distances correspondant aux côtés des cellules 6, des fentes à mi-hauteur qui permettent leur assemblage par engagement mutuel dans des dispositions à 90°, comme représenté sur la figure 2.

Les plaquettes 8a et 8b assemblées sont ensuite soudées suivant les lignes d'assemblage constituant les arêtes des cellules 6 de la grille-entretoise. Préalablement à leur assemblage, les plaquettes 8a et 8b sont découpées et embouties pour constituer des bossettes 9 en saillie à l'intérieur des cellules 6.

Les plaquettes 8a et 8b comportent également des ouvertures qui sont découpées à intervalle régulier, de manière à assurer le montage et la fixation de ressorts 10 qui font également saillie vers l'intérieur des cellules 6. Chaque ceinture périphérique 7 comporte deux parois adjacentes à 90°, sur chacune desquelles sont réalisées, par découpage et repoussage du métal des plaquettes, deux bossettes 9 espacées dans la direction axiale de la cellule. Les deux autres parois de la ceinture 7, qui sont adjacentes et à 90° l'une de l'autre, reçoivent des ressorts 10.

De cette manière, six points de contact sont prévus à l'intérieur de chacune des cellules 6 pour un crayon de combustible nucléaire 2 introduit suivant la direction de l'axe 6' dans une position sensiblement centrée à l'intérieur de la cellule 6.

Le diamètre extérieur du crayon de combustible nucléaire 2 est inférieur à la longueur du côté d'une cellule 6, de telle sorte qu'un espace libre 11 est ménagé autour de la surface externe cylindrique du crayon 2, à l'intérieur de la ceinture périphérique 7 de la cellule 6 dans laquelle le crayon est maintenu en position sensiblement centrée par les bossettes 9 et les ressorts 10.

On voit sur la figure 2 que les plaquettes 8a et 8b constituant la grille-entretoise 3 sont découpées suivant leurs bords supérieurs pour constituer des ailettes de brassage 12 de l'eau de refroidissement circulant à l'intérieur des cellules 6, au contact de la surface externe des crayons de combustible nucléaire 2.

Les ailettes de brassage 12 sont repliées vers l'intérieur des cellules 6, de manière à diriger l'eau de refroidissement à la sortie de chacune des cellules 6 vers une cellule 6 voisine. On obtient ainsi un effet de brassage de l'eau circulant au contact de chacun des crayons de combustible nucléaire 2 dans la direction longitudinale.

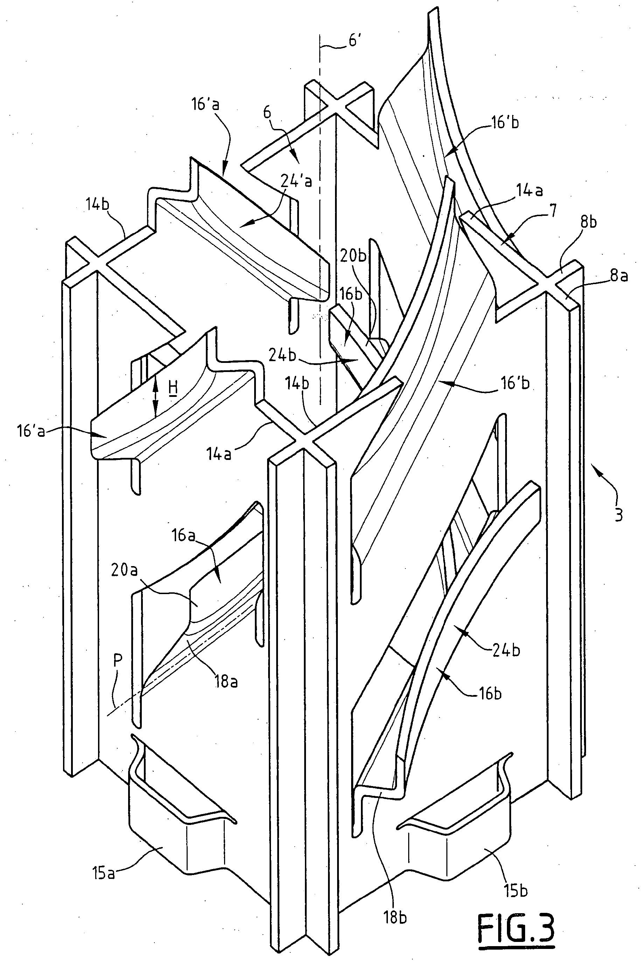

Sur la figure 3, on a représenté une cellule 6 d'une grille-entretoise 3 suivant l'invention qui peut être utilisée en remplacement d'une grille-entretoise selon l'art antérieur telle que représentée sur la figure 2.

De manière générale, la grille-entretoise 3 de la figure 3 est réalisée d'une manière analogue à la grille-entretoise 3 de la figure 2, c'est-à-dire à partir de plaquettes métalliques 8a et 8b qui sont assemblées et fixées par soudage à angles droits pour constituer un réseau de cellules 6 à section carrée délimitées chacune par une ceinture périphérique 7 de parois. La ceinture 7 a une forme parallélépipédique à base carrée et ses parois sont constituées par des portions de plaquettes 8a et 8b assemblées entre elles à angles droits.

La grille-entretoise 3 de la figure 3 est plus précisément une grille semblable à celle décrite dans le document FR-2 837 975 et son correspondant US-2005/226 358, les différences avec la grille-entretoise de ces documents étant cependant soulignées dans la suite de la description.

Toutes les cellules 6 de la grille-entretoise 3 ayant des structures analogues, hormis éventuellement les cellules 6 de la grille-entretoise 3 de la couche périphérique extérieure, seule la structure de la cellule 6 représentée sur la figure 3 sera décrite par la suite.

La ceinture périphérique 7 de la cellule 6 comprend deux parois opposées 14a et deux parois opposées 14b qui ont des formes analogues, sauf pour ce qui concerne l'orientation des bossettes 15a et 15b et des éléments d'appui 16a, 16b, 16'a et 16'b qui y ont été réalisés par découpage et repoussage des parois 14a et 14b.

Seule la structure de la paroi 14a située à gauche sur la figure 3 va donc être décrite par la suite.

Deux éléments d'appui 16a et 16'a ont été réalisés l'un au-dessus de l'autre par découpage et repoussage du métal de la paroi 14a. L'élément d'appui 16a inférieur fait saillie vers l'intérieur de la cellule 6 considérée, et l'élément d'appui 16'a fait saillie à l'intérieur d'une cellule 6 adjacente. Hormis leurs orientations, ces éléments d'appui 16a et 16'a ont des structures analogues et seule celle de l'élément d'appui 16a inférieur sera décrite dans ce qui suit.

L'élément d'appui 16a comprend un tronçon 18a de liaison au reste de la paroi 14a et une partie terminale de contact 20a de hauteur H le long de la direction longitudinale.

Le tronçon de liaison 18a est plié par rapport au reste de la paroi 14a vers l'intérieur de la cellule 6 et la partie de contact 20a est pliée vers le haut par rapport au tronçon de liaison 18a.

Le tronçon de liaison 18a a été découpé de manière oblique par rapport à l'axe 6' dans la paroi 14a et il est donc plié par rapport à cette dernière le long d'une ligne P inclinée par rapport à cet axe 6' d'un angle d'environ 30°. Plus généralement, cette inclinaison peut être en valeur absolue strictement supérieure à 0° et strictement inférieure à 90°.

Le tronçon de liaison 18a forme donc une lame hélicoïdale sensiblement centrée sur l'axe 6'. Les tronçons 18a et 18b d'éléments d'appui 16a et 16b prévus dans des parois 14a et 14b adjacentes sont disposés dans le prolongement l'un de l'autre de manière à produire un enroulement de l'écoulement de l'eau de refroidissement autour du crayon 2 à l'intérieur de la cellule 6. Comme dans les documents FR-2 837 975 et US-2005/226 358 précités, les sens d'enroulement de l'écoulement d'eau dans deux cellules 6 adjacentes sont opposés.

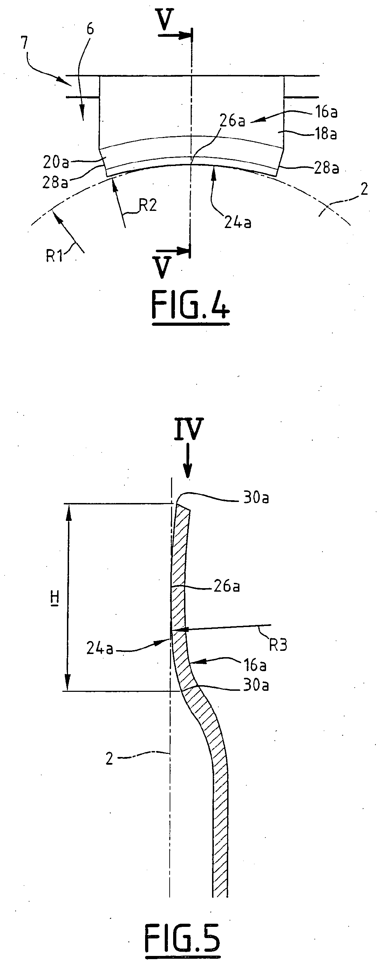

La partie de contact 20a prend appui sur le crayon de combustible nucléaire 2 correspondant par l'intermédiaire de sa surface 24a orientée vers l'intérieur de la cellule 6. La section transversale de cette surface est visible sur la figure 4.

Comme on le voit sur la figure 4, la surface intérieure 24a a avant irradiation, dans un plan transversal, c'est-à-dire orthogonal à l'axe central 6' de la cellule 6, une forme concave. Plus précisément, il s'agit d'une forme en arc de cercle.

Contrairement à l'état de la technique, la concavité transversale de la surface intérieure 24a est plus faible que la convexité transversale de la surface externe du crayon de combustible 2 sur laquelle la surface intérieure 24a prend appui. En d'autres termes, le rayon de courbure transversale R2 de la surface 24a, c'est-à-dire selon le plan de la figure 4, est strictement supérieur au rayon de courbure transversale R1 de la surface externe du crayon de combustible nucléaire 2 correspondant. On observera que sur les figures 4 et 5, la surface externe du crayon 2 est représentée en traits mixtes.

Typiquement, le rayon de courbure transversale R1 de la surface externe du crayon de combustible nucléaire 2, par rapport à l'axe central 6', est d'environ 4,75 mm pour un assemblage de combustible 1 pour réacteur à eau pressurisée comprenant 17x17 cellules 6 par grille-entretoise 3 et le rayon de courbure transversale R2 de la surface intérieure 24a est par exemple d'environ 6 mm.

Plus généralement, R2 est strictement supérieur à 1,05xR1, voire strictement supérieur à 1,15xR1, préférentiellement strictement supérieur à 1,25xR1.

Ainsi, la surface intérieure 24a va dans les faits prendre appui sur la surface externe du crayon de combustible nucléaire 2 correspondant en une zone 26a de la surface 24a, cette zone de contact effectif 26a étant sensiblement centrale et éloignée des bords latéraux 28a de la surface intérieure 24a. Les bords latéraux 28a peuvent être arrondis ou chanfreinés pour ne pas présenter de surface agressive ou d'arête vive pouvant venir au contact de la gaine du crayon de combustible 2.

Comme illustré par la figure 5, la surface intérieure 24a a avant irradiation dans un plan longitudinal et orienté radialement par rapport à l'axe central 6', une forme convexe. Cette convexité n'est pas visible sur la figure 3 pour des raisons d'échelle de la représentation.

Dans l'exemple représenté, la surface 24a a une forme courbe avec un rayon de courbure R3 d'environ 23 mm dans le plan de la figure 5.

Plus généralement, le rayon R3 sera inférieur à 1000 mm et de préférence compris entre H/2 et 4H², H étant la hauteur le long de la direction longitudinale de la surface intérieure 24a de la partie terminale 20a de l'élément d'appui.

Ainsi, la zone de contact effectif 26a est espacée des bords supérieur et inférieur 30a de la surface intérieure 24a. Les bords 30a peuvent être arrondis ou chanfreinés pour ne pas présenter de surface agressive ou d'arête vive pouvant venir au contact de la gaine du crayon de combustible 2.

La surface intérieure 24a avec sa convexité transversale et sa convexité longitudinale a donc une forme en selle de cheval.

Cette forme en selle de cheval, et la différence de courbure transversale entre la surface intérieure 24a et la surface externe du crayon 2 correspondant, permettent d'éloigner la zone de contact effectif 26a des bords latéraux 28a et longitudinaux 30a de la surface 24a, de sorte que les risques de percement de la gaine du crayon de combustible nucléaire 2 par fretting sont réduits.

Cet éloignement de la zone de contact 26a des bords latéraux 28a et longitudinaux 30a peut être obtenu avec une grande certitude, malgré les tolérances de fabrication et les variations dimensionnelles en service des composants. On observera que la surface 24a conserve sa forme en selle de cheval et sa différence de concavité avec les crayons 2, même après un séjour en réacteur et malgré les variations dimensionnelles et les déformations qu'il engendre.

En pratique, la zone de contact effectif 26a est initialement ponctuelle puis devient très rapidement une zone elliptique, par accommodation de la surface 24a et de la surface externe du crayon 2 correspondant. L'aire de cette zone elliptique se stabilise également rapidement de sorte que la cinétique d'usure de la gaine du crayon de combustible nucléaire 2 devient très faible, voire nulle. Cette diminution très importante de la cinétique d'usure est due au fait que d'une part l'aire de la zone de contact effectif 26a est beaucoup plus importante que celle obtenue grâce à un contact cylindre/plan ou cylindre/cylindre comme dans l'état de la technique et d'autre part que l'augmentation de la profondeur d'usure génère une augmentation substantielle de l'aire des surfaces en contact.

En outre, la forme en selle de cheval favorise le bon positionnement du crayon de combustible nucléaire 2 dans la cellule 6 et évite son déplacement transversal, la surface intérieure 24a se comportant en quelque sorte comme un nid.

On observera également que la convexité longitudinale de la surface 24a permet de limiter les risques d'endommagement du crayon 2 lors de son introduction dans la cellule 6, par exemple par un déplacement vertical vers le bas.

Dans l'exemple décrit ci-dessus, la section longitudinale et radiale de la surface intérieure 24a, c'est-à-dire comme vu sur la figure 5, est courbe. Cependant, il est envisageable dans certaines variantes que cette section ait d'autres formes et comporte, par exemple, une partie centrale rectiligne prolongée par des extrémités qui elles sont courbes, voire que la convexité soit discontinue. La section transversale de la surface intérieure 24a peut également être discontinue.

Dans l'exemple décrit ci-dessus, les éléments d'appui 16a et 16b assurent également le brassage de l'eau du circuit primaire via leurs tronçons 18a et 18b, de sorte qu'il n'est pas nécessaire de prévoir des ailettes de brassage 12 additionnelles. Cependant, on observera que les deux caractéristiques décrites, à savoir la forme de la surface intérieure 24a en selle de cheval et les différences de courbures transversales entre la surface 24a et la surface externe d'un crayon 2, peuvent être utilisées sur d'autres types d'éléments d'appui et en particulier sur des éléments d'appui qui n'ont pas de fonction de brassage.

Ces deux caractéristiques peuvent être ainsi utilisées sur tous les types d'éléments d'appui, qu'il s'agisse de bossettes rigides, élastiques ou de ressorts, quelle que soit leur orientation par rapport à l'axe longitudinal L.

On notera également que ces deux caractéristiques peuvent être utilisées indépendamment l'une de l'autre dans la mesure où elles permettent toutes deux de limiter les risques d'endommagement par fretting et de diminuer la sensibilité aux tolérances de fabrication.

De même, ces caractéristiques, seules ou combinées, peuvent être prévues seulement sur certains des éléments d'appui, ou même seulement sur certaines grilles-entretoises. Le nombre et la position des éléments d'appui concernés peuvent également varier en fonction des modes de réalisation.

On peut ainsi choisir de positionner de tels éléments d'appui, avec les caractéristiques en question isolées ou combinées, en fonction des besoins spécifiques, tels qu'un risque de fretting accru ou une variabilité plus grande de la fabrication...

Les caractéristiques décrites ci-dessus peuvent être utilisées dans des assemblages de combustible nucléaire destinés à d'autres réacteurs que les réacteurs à eau sous pression, par exemple les réacteurs à eau bouillante.

## Revendications

1. Grille-entretoise (3) pour assemblage (1) de combustible nucléaire pour réacteur à eau légère, l'assemblage de combustible nucléaire (1) comprenant des crayons de combustible nucléaire (2) s'étendant le long d'une direction longitudinale (L), la grille-entretoise (3) étant du type délimitant un réseau sensiblement régulier de cellules (6) de réception des crayons de combustible nucléaire (2), chaque cellule (6) étant entourée par une ceinture périphérique (7) de parois et ayant un axe longitudinal central (6') destiné à être sensiblement confondu avec l'axe d'un crayon de combustible nucléaire (2) destiné à être reçu dans la cellule (6), la grille-entretoise (3) comprenant en outre des éléments d'appui (16a, 16b) qui font saillie depuis la ceinture périphérique (7) de parois à l'intérieur des cellules (6), les éléments d'appui (16a, 16b) comprenant des parties de contact (20a, 20b) dont des surfaces (24a, 24b) orientées vers l'intérieur des cellules (6) sont destinées à venir au contact des crayons de combustible nucléaire (2), la surface intérieure (24a, 24b) d'au moins un élément d'appui (16a, 16b) ayant avant irradiation une forme concave dans un plan transversal à la direction longitudinale (L), ledit élément d'appui (16a, 16b) comprenant en outre un tronçon (18a, 18b) formant une lame hélicoïdale de brassage du fluide de réfrigération du réacteur nucléaire, ladite lame hélicoïdale (18a, 18b) étant sensiblement centrée sur l'axe central (6') de la cellule correspondant et reliant la partie de contact (20a, 20b) à la ceinture périphérique (7) de parois de la cellule (6) correspondante, la partie de contact (20a, 20b) constituant une partie terminale de l'élément d'appui et étant pliée par rapport à la lame hélicoïdale (18a, 18b) qui est elle-même pliée par rapport à la ceinture périphérique (7) de parois, la partie de contact s'étendant entre un bord inférieur (30a) et un bord supérieur (30a), **caractérisée en ce que** la surface intérieure (24a, 24b) de la partie de contact (20a, 20b) dudit élément d'appui (16a, 16b) a en outre avant irradiation, entre son bord inférieur (30a) et son bord supérieur (30a), une forme convexe et courbe dans un plan longitudinal orienté radialement par rapport à l'axe central (6') de la cellule (6) correspondante.

2. Grille entretoise selon la revendication 1, dans laquelle la surface intérieure (24a, 24b) dudit élément d'appui (16a, 16b) a avant irradiation une forme convexe dans un plan longitudinal orienté radialement par rapport à l'axe central (6') de la cellule (6) avec un rayon de courbure longitudinale (R3) inférieur à 1000 mm.

3. Grille-entretoise selon l'une des revendications précédentes, dans laquelle la surface intérieure (24a, 24b) dudit élément d'appui (14a, 14b) a avant irradiation une forme concave dans un plan transversal à la direction longitudinale (L) avec un rayon de courbure transversale (R2) supérieur au rayon de courbure transversale (R1) de la surface externe des crayons de combustible nucléaire (2).

4. Grille-entretoise selon la revendication 3, dans laquelle le rayon de courbure transversale (R2) de la surface intérieure (24a, 24b) est strictement supérieur à 1,05 fois le rayon de courbure transversale (R1) de la surface externe des crayons de combustible nucléaire (2).

5. Grille-entretoise selon la revendication 4, dans laquelle le rayon de courbure transversale (R2) de la surface intérieure (24a, 24b) est strictement supérieur à 1,15 fois le rayon de courbure transversale (R1) de la surface externe des crayons de combustible nucléaire (2).

6. Grille-entretoise selon la revendication 5, dans laquelle le rayon de courbure transversale (R2) de la surface intérieure (24a, 24b) est strictement supérieur à 1,25 fois le rayon de courbure transversale (R1) de la surface externe des crayons de combustible nucléaire (2).

7. Assemblage de combustible nucléaire (1) pour réacteur à eau légère comprenant des crayons de combustible nucléaire (2) s'étendant le long d'une direction longitudinale (L) et un squelette de maintien des crayons de combustible nucléaire (2), le squelette comprenant des grilles-entretoises (3), chaque grille-entretoise (3) étant du type délimitant un réseau sensiblement régulier de cellules (6) de réception des crayons de combustible nucléaire (2), chaque cellule (6) étant entourée par une ceinture périphérique (7) de parois et ayant un axe longitudinal central (6') sensiblement confondu avec l'axe d'un crayon de combustible nucléaire (2) reçu dans la cellule (6), chaque grille-entretoise (3) comprenant en outre des éléments d'appui (16a, 16b) qui font saillie depuis la ceinture périphérique (7) de parois à l'intérieur des cellules (6), les éléments d'appui (16a, 16b) comprenant des parties de contact (20a, 20b) dont des surfaces (24a, 24b) orientées vers l'intérieur des cellules (6) viennent en butée contre les crayons de combustible nucléaire (2), la surface intérieure (24a, 24b) d'au moins un élément d'appui (16a, 16b) ayant avant irradiation une forme concave dans un plan transversal à la direction longitudinale (L), ledit élément d'appui (16a, 16b) comprenant en outre un tronçon (18a, 18b) formant une lame hélicoïdale de brassage du fluide de réfrigération du réacteur nucléaire, ladite lame hélicoïdale (18a, 18b) étant sensiblement centrée sur l'axe central (6') de la cellule correspondant et reliant la partie de contact (20a, 20b) à la ceinture périphérique (7) de parois de la cellule (6) correspondante, la partie de contact (20a, 20b) constituant une partie terminale de l'élément d'appui et étant pliée par rapport à la lame hélicoïdale (18a, 18b) qui est elle-même pliée par rapport à la ceinture périphérique (7) de parois, la partie de contact s'étendant entre un bord inférieur (30a) et un bord supérieur (30a), **caractérisé en ce qu'**au moins une grille-entretoise (3) est une grille-entretoise selon l'une des revendications précédentes.

8. Assemblage selon la revendication 7, dans lequel la surface intérieure (24a, 24b) dudit élément d'appui (14a, 14b) a avant irradiation une forme concave dans un plan transversal à la direction longitudinale (L), avec un rayon de courbure transversale (R2) supérieur au rayon de courbure transversale (R1) de la surface externe du crayon de combustible nucléaire (2) reçu dans la cellule (6) correspondante.

9. Assemblage selon la revendication 8, dans lequel le rayon de courbure transversale (R2) de la surface intérieure (24a, 24b) est strictement supérieur à 1,05 fois le rayon de courbure transversale (R1) de la surface externe du crayon de combustible nucléaire (2) reçu dans la cellule (6) correspondante.

10. Assemblage selon la revendication 9, dans lequel le rayon de courbure transversale (R2) de la surface intérieure (24a, 24b) est strictement supérieur à 1,15 fois le rayon de courbure transversale (R1) de la surface externe du crayon de combustible nucléaire (2) reçu dans la cellule (6) correspondante.

11. Assemblage selon la revendication 10, dans lequel le rayon de courbure transversale (R2) de la surface intérieure (24a, 24b) est strictement supérieur à 1,25 fois le rayon de courbure transversale (R1) de la surface externe du crayon de combustible nucléaire (2) reçu dans la cellule (6) correspondante.

## Patentansprüche

1. Abstandshaltegitter (3) für ein Brennelement (1) für einen Leichtwasserreaktor, wobei das Brennelement (1) Brennstäbe (2) aufweist, die sich entlang einer Längsrichtung (L) erstrecken, wobei das Abstandshaltegitter (3) von einer Art ist, die ein im Wesentlichen regelmäßiges Netz von Zellen (6) zur Aufnahme der Brennstäbe (2) begrenzt, wobei jede Zelle (6) von einem Umfangsgürtel (7) aus Wänden umfasst ist und eine Längsmittelachse (6') aufweist, die vorgesehen ist, im Wesentlichen mit der Achse eines in der Zelle (6) aufzunehmenden Brennstabs (2) übereinzustimmen, wobei das Abstandshaltegitter (3) außerdem Stützelemente (16a, 16b) umfasst, die von dem Umfangsgürtel (7) aus Wänden in das Innere der Zellen (6) hineinragen, die Stützelemente (16a, 16b) Kontaktteile (20a, 20b) umfassen, deren in das Innere der Zellen (6) gerichtete Flächen (24a, 24b) vorgesehen sind, in Kontakt mit den Brennstäben (2) zu kommen, die Innenfläche (24a, 24b) mindestens eines Stützelements (16a, 16b) vor Bestrahlung eine in einer Ebene quer zur Längsrichtung (L) konkave Form aufweist, das Stützelement (16a, 16b) außerdem einen Abschnitt (18a, 18b) umfasst, der ein spiralförmiges Blatt zum Rühren eines Fluids zur Kühlung des Kernreaktors bildet, das spiralförmige Blatt (18a, 18b) im Wesentlichen auf die Mittelachse (6') der korrespondierenden Zelle zentriert ist und das Kontaktteil (20a, 20b) mit dem Umfangsgürtel (7) an Wänden der korrespondierenden Zelle (6) verbindet, das Kontaktteil (20a, 20b) ein Abschlussteil des Stützelements bildet und in Bezug auf das spiralförmige Blatt (18a, 18b) gefaltet ist, das selbst in Bezug auf den Umfangsgürtel (7) aus Wänden gefaltet ist, und das Kontaktteil sich zwischen einem unteren Rand (30a) und einem oberen Rand (30a) erstreckt, **dadurch gekennzeichnet, dass** die Innenfläche (24a, 24b) des Kontaktteils (20a, 20b) des Stützelements (16a, 16b) außerdem vor Bestrahlung zwischen seinem unteren Rand (30a) und seinem oberen Rand (30a) in einer Längsebene, die radial in Bezug auf die Mittelachse (6') der korrespondierenden Zelle (6) gerichtet ist, eine konvexe und gekrümmte Form aufweist.

2. Abstandshaltegitter nach Anspruch 1, bei der die Innenfläche (24a, 24b) des Stützelements (16a, 16b) vor Bestrahlung in einer Längsebene, die radial in Bezug auf die Mittelachse (6') der Zelle (6) gerichtet ist, eine konvexe Form mit einem Längskrümmungsradius (R3) kleiner als 1000 mm aufweist.

3. Abstandshaltegitter nach einem der vorhergehenden Ansprüche, bei dem die Innenfläche (24a, 24b) des Stützelements (14a, 14b) vor Bestrahlung in einer Ebene quer zur Längsrichtung (L) eine konkave Form mit einem Querkrümmungsradius (R2) größer als der Querkrümmungsradius (R1) der Außenfläche der Brennstäbe (2) aufweist.

4. Abstandshaltegitter nach Anspruch 3, bei dem der Querkrümmungsradius (R2) der Innenfläche (24a, 24b) streng größer als 1,05-mal der Querkrümmungsradius (R1) der Außenfläche der Brennstäbe (2) ist.

5. Abstandshaltegitter nach Anspruch 4, bei dem der Querkrümmungsradius (R2) der Innenfläche (24a, 24b) streng größer als 1,15-mal der Querkrümmungsradius (R1) der Außenfläche der Brennstäbe (2) ist.

6. Abstandshaltegitter nach Anspruch 5, bei dem der Querkrümmungsradius (R2) der Innenfläche (24a, 24b) streng größer als 1,25-mal der Querkrümmungsradius (R1) der Außenfläche der Brennstäbe (2) ist.

7. Brennelement (1) für einen Leichtwasserreaktor, das sich entlang einer Längsrichtung (L) erstreckende Brennstäbe und ein Skelett zum Halten der Brennstäbe (2) umfasst, wobei das Skelett Abstandshaltegitter (3) umfasst, jedes Haltegitter (3) von einer Art ist, die ein im Wesentlichen regelmäßiges Netz von Zellen (6) zur Aufnahme der Brennstäbe (2) begrenzt, jede Zelle (6) von einem Umfangsgürtel (7) aus Wänden umschlossen ist und eine Längsmittelachse (6') aufweist, die im Wesentlichen mit der Achse eines in der Zelle (6) aufgenommenen Brennstabs (2) übereinstimmt, wobei jedes Abstandshaltegitter (6) außerdem Stützelemente (16a, 16b) umfasst, die von dem Umfangsgürtel (7) aus Wänden in das Innere der Zellen (6) hervorragen, die Stützelemente (16a, 16b) Kontaktteile (20a, 20b) umfassen, deren in das Innere der Zellen (6) gerichtete Flächen (24a, 24b) gegen die Brennstäbe (2) anschlagen, wobei die Innenfläche (24a, 24b) mindestens eines Stützelements (16a, 16b) vor Bestrahlung eine in einer Ebene quer zur Längsrichtung (L) konkave Form aufweist, das Stützelement (16a, 16b) außerdem einen Abschnitt (18a, 18b) umfasst, der ein spiralförmiges Blatt zum Rühren des Fluids zur Kühlung des Kernreaktors bildet, das spiralförmige Blatt (18a, 18b) im Wesentlichen auf die Mittelachse (6') der korrespondierenden Zelle zentriert ist und das Kontaktteil (20a, 20b) mit dem Umfangsgürtel (7) aus Wänden der korrespondierenden Zelle (6) verbindet, das Kontaktteil (20a, 20b) ein Abschlussteil des Stützelements bildet und in Bezug auf das spiralförmige Blatt (18a, 18b) gefaltet ist, das selbst in Bezug auf den Umfangsgürtel (7) aus Wänden gefaltet ist, und das Kontaktteil sich zwischen einem unteren Rand (30a) und einem oberen Rand (30a) erstreckt, **dadurch gekennzeichnet, dass** mindestens ein Abstandshaltegitter (3) ein Abstandshaltegitter nach einem der vorhergehenden Ansprüche ist.

8. Anordnung nach Anspruch 7, bei der die Innenfläche (24a, 24b) des Stützelements (14a, 14b) vor Bestrahlung in einer Ebene quer zur Längsrichtung (L) eine konkave Form mit einem Querkrümmungsradius (R2) größer als der Querkrümmungsradius (R1) der Außenfläche des Brennstabs (2) aufweist, der in der korrespondierenden Zelle (6) aufgenommen ist.

9. Anordnung nach Anspruch 8, bei der der Querkrümmungsradius (R2) der Innenfläche (24a, 24b) streng größer als 1,05-mal der Querkrümmungsradius (R1) der Außenfläche des in der korrespondierenden Zelle (6) aufgenommenen Brennstabs (2) ist.

10. Anordnung nach Anspruch 9, bei der der Querkrümmungsradius (R2) der Innenfläche (24a, 24b) streng größer als 1,15-mal der Querkrümmungsradius (R1) der Außenfläche des in der korrespondierenden Zelle (6) aufgenommenen Brennstabs (2) ist.

11. Anordnung nach Anspruch 10, bei der der Querkrümmungsradius (R2) der Innenfläche (24a, 24b) streng größer als 1,25-mal der Querkrümmungsradius (R1) der Außenfläche des in der korrespondierenden Zelle (6) aufgenommenen Brennstabs (2) ist.

## Claims

1. A spacer grid (3) for a nuclear fuel assembly (1) for a light water reactor, the nuclear fuel assembly (1) comprising nuclear fuel rods (2) extending along a longitudinal direction (L), the spacer grid (3) being of the type delimiting a substantially regular array of cells (6) housing nuclear fuel rods (2), each cell (6) being surrounded by a peripheral belt (7) of walls and having a central longitudinal axis (6') designed to be substantially the same as the axis of a nuclear fuel rod (2) intended to be housed within the cell (6), the spacer grid (3) further comprising supporting members (16a, 16b) which project into the cells (6) from the peripheral belt (7) of walls, the supporting members (16a, 16b) comprising contact parts (20a, 20b) whose surfaces (24a, 24b) orientated towards the interior of the cells (6) are intended to come into contact with nuclear fuel rods (2), the inner surface (24a, 24b) of at least one supporting member (16a, 16b) having before irradiation a concave shape in a plane transverse to the longitudinal direction (L), the said supporting member (16a, 16b) further comprising a section (18a, 18b) forming a helical blade for stirring the nuclear reactor cooling fluid, the said helical blade (18a, 18b) being substantially centred on the central axis (6') of the corresponding cell and connecting the contact part (20a, 20b) to the peripheral belt (7) of walls of the corresponding cell (6), the contact part (20a, 20b) constituting a terminal part of the supporting member and being folded with respect to the helical blade (18a, 18b) which is itself folded with respect to the peripheral belt (7) of walls, the contact part extending between a lower edge (30a) and an upper edge (30a), **characterised in that** the inner surface (24a, 24b) of the contact part (20a, 20b) of the said supporting member (16a, 16b) also has before irradiation a convex shape curved in a longitudinal plane orientated radially with respect to the central axis (6') of the corresponding cell (6) between its lower edge (30a) and its upper edge (30a).

2. A spacer grid according to Claim 1, wherein the inner surface (24a, 24b) of the said supporting member (16a, 16b) has before irradiation a convex shape in a longitudinal plane orientated radially with respect to the central axis (6') of the cell (6) with a longitudinal radius of curvature (R3) of less than 1000 mm.

3. A spacer grid according to any one of the preceding claims, wherein the inner surface (24a, 24b) of the said supporting member (14a, 14b) has before irradiation a concave shape in a plane transverse to the longitudinal direction (L) with a transverse radius of curvature (R2) which is greater than the transverse radius of curvature (R1) of the outer surface of the nuclear fuel rods (2).

4. A spacer grid according to Claim 3, wherein the transverse radius of curvature (R2) of the inner surface (24a, 24b) is strictly greater than 1.05 times the transverse radius of curvature (R1) of the outer surface of the nuclear fuel rods (2).

5. A spacer grid according to Claim 4, wherein the transverse radius of curvature (R2) of the inner surface (24a, 24b) is strictly greater than 1.15 times the transverse radius of curvature (R1) of the outer surface of the nuclear fuel rods (2).

6. A spacer grid according to Claim 5, wherein the transverse radius of curvature (R2) of the inner surface (24a, 24b) is strictly greater than 1.25 times the transverse radius of curvature (R1) of the outer surface of the nuclear fuel rods (2).

7. A nuclear fuel assembly (1) for a light water reactor comprising nuclear fuel rods (2) extending in a longitudinal direction (L) and a skeleton assembly holding nuclear fuel rods (2) in place, the skeleton assembly comprising spacer grids (3), each spacer grid (3) being of the type delimiting a substantially regular array of cells (6) housing nuclear fuel rods (2), each cell (6) being surrounded by a peripheral belt (7) of walls and having a central longitudinal axis (6') which is substantially the same as the axis of a nuclear fuel rod (2) housed in the cell (6), each spacer grid (3) further comprising supporting members (16a, 16b) projecting into the cells (6) from the peripheral belt (7) of walls, the supporting members (16a, 16b) comprising contact parts (20a, 20b) whose surfaces (24a, 24b) orientated towards the interior of the cells (6) abut against the nuclear fuel rods (2), the inner surface (24a, 24b) of at least one supporting member (16a, 16b) having before irradiation a concave shape in a plane transverse to the longitudinal direction (L), the said supporting member (16a, 16b) further comprising a section (18a, 18b) forming a helical blade for stirring the nuclear reactor cooling fluid, the said helical blade (18a, 18b) being substantially centred on the central axis (6') of the corresponding cell and connecting the contact part (20a, 20b) to the peripheral belt (7) of walls of the corresponding cell (6), the contact part (20a, 20b) constituting a terminal part of the supporting member and being folded with respect to the helical blade (18a, 18b) which is itself folded with respect to the peripheral belt (7) of walls, the contact part extending between a lower edge (30a) and an upper edge (30a), **characterised in that** at least one spacer grid (3) is a spacer grid according to one of the preceding claims.

8. An assembly according to Claim 7, wherein the inner surface (24a, 24b) of the said supporting member (14a, 14b) has before irradiation a concave shape in a plane transverse to the longitudinal direction (L), with a transverse radius of curvature (R2) which is greater than the transverse radius of curvature (R1) of the outer surface of the nuclear fuel rod (2) housed in the corresponding cell (6).

9. An assembly according to Claim 8, wherein the transverse radius of curvature (R2) of the inner surface (24a, 24b) is strictly greater than 1.05 times the transverse radius of curvature (R1) of the outer surface of the nuclear fuel rod (2) housed in the corresponding cell (6).

10. An assembly according to Claim 9, wherein the transverse radius of curvature (R2) of the inner surface (24a, 24b) is strictly greater than 1.15 times the transverse radius of curvature (R1) of the outer surface of the nuclear fuel rod (2) housed in the corresponding cell (6).

11. An assembly according to Claim 10, wherein the transverse radius of curvature (R2) of the inner surface (24a, 24b) is strictly greater than 1.25 times the transverse radius of curvature (R1) of the outer surface of the nuclear fuel rod (2) housed in the corresponding cell (6).
